# EUROPÄISCHE PATENTSCHRIFT

(11) **EP 3 396 481 B1**
(45) Veröffentlichungstag und Bekanntmachung des Hinweises auf die Patenterteilung: **18.08.2021**
(21) Anmeldenummer: 18153492.6
(22) Anmeldetag: 25.01.2018
(51) Int. Cl.: G05B 19/404

(54) **VERFAHREN ZUR KOMPENSATION DER FRÄSERABDRÄNGUNG**
METHOD FOR COMPENSATING FOR THE DEFLECTION OF A MILLING CUTTER
PROCÉDÉ DE COMPENSATION DE DÉFLECTION EN FRAISAGE

(30) Priorität: 25.04.2017 DE 102017206931
(43) Veröffentlichungstag der Anmeldung: 31.10.2018
(73) Patentinhaber: Dr. Johannes Heidenhain GmbH, 83301 Traunreut (DE)
(72) Erfinder: BOYE, Tim, 83329 Waging am See (DE)

(56) Entgegenhaltungen:
- DE-A1- 10 305 196
- DE-A1-102005 012 105
- KR-A- 20130 042 140
- US-B2- 8 093 856

## Beschreibung

### GEBIET DER TECHNIK

Die vorliegende Erfindung betrifft ein Verfahren zur Kompensation der Abdrängung eines Werkzeugs bei der Fräsbearbeitung eines Werkstücks. Das Verfahren greift dabei auf in einer Numerischen Steuerung verarbeitete Größen zu und benötigt keinen speziellen Sensor, um die Kompensation auszuführen.

### STAND DER TECHNIK

Bei der Fräsbearbeitung eines Werkstücks auf einer numerisch gesteuerten Werkzeugmaschine wird ein rotierendes Fräswerkzeug nach den Vorgaben eines Bearbeitungsprogramms durch das Werkstück bewegt. Dabei wird Material abgetragen, bis das Werkstück die gewünschte Form aufweist. Während der Bearbeitung treten erhebliche Prozesskräfte auf, die zu einer Verformung der nie völlig starren Anordnung aus Werkzeugmaschine, Aufspannung und Werkzeug führen, so dass es im Ergebnis Abweichungen zwischen der programmierten und der tatsächlichen Form des Werkstücks gibt.

Ein besonders kritischer Anteil der Prozesskraft (vor allem beim Schälfräsen, bei dem die gefräste Flanke durch einen Schaftfräser entsteht) ist die Abdrängkraft, die senkrecht zur Rotationsachse des Fräsers und senkrecht auf der programmierten Bahn des Fräsers bzw. normal zur bearbeiteten Oberfläche steht. Diese Abdrängkraft führt zu einer Abdrängung oder Auslenkung des Fräsers. Auslenkungen aus der Sollbahn des Fräsers aufgrund der Abdrängkraft führen unmittelbar zu Konturfehlern. Es sind daher im Stand der Technik Verfahren bekannt, diese Fräserabdrängung zu kompensieren.

Eine Kompensation der Fräserabdrängung kann erfolgen, indem die Abweichungen am fertigen Werkstück gemessen und dann in einem geänderten Bearbeitungsprogramm für künftige Werkstücke berücksichtigt werden. Dabei wird aber Ausschuss produziert, und es entsteht ein erheblicher Zeitaufwand, der vor allem für Einzelstücke oder Kleinserien nicht vertretbar ist. Außerdem muss dieses Vorgehen für jedes neue Werkstück wiederholt werden.

Es wurde in der DE 10305196 A1 bereits vorgeschlagen, steuerungsinterne Größen zu verwenden, um auf Abweichungen im Fertigungsprozess zu schließen und diese unmittelbar während der Bearbeitung zu kompensieren, indem Korrekturwerte für die Achspositionen einer Werkzeugmaschine anhand der steuerungsinternen Größen ermittelt werden. Verfahren zu Kompensation der Abdrängung eines Fräsers sind u. a. aus den Druckschriften US 8093856 und KR 2013 00422140 bekannt.

### ZUSAMMENFASSUNG DER ERFINDUNG

Es ist Aufgabe der Erfindung, ein Verfahren zur Kompensation der Abdrängung eines Fräsers anzugeben, das einen Zusammenhang zwischen einer in der Numerischen Steuerung verarbeiteten Größe und der Abdrängung des Fräsers von seiner Sollbahn nutzt, und das auf möglichst einfache Weise für einen möglichst weiten Bereich von Anwendungsfällen eine Kompensation der Fräserabdrängung ermöglicht.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zur Kompensation der Abdrängung eines Fräsers beim Bearbeiten eines Werkstücks mit einer numerisch gesteuerten Werkzeugmaschine mit mehreren Achsen offenbart, das folgende Schritte umfasst: Ausführen eines Lernschnittes an einem Testwerkstück mit bekannter Geometrie mit dem an einer Werkzeugspindel befestigten Fräser im Gleichlauf, dabei Ermitteln eines Zusammenhangs zwischen einer dem Drehmoment eines Antriebs der Werkzeugspindel proportionalen Größe und der Abdrängung des Fräsers normal zu einer Oberfläche des Testwerkstücks, wobei die Abdrängung durch einen Vergleich der Istkontur des Testwerkstücks mit einer Sollkontur festgestellt wird. Es folgt das Abspeichern des Zusammenhangs für den Fräser und das Bearbeiten des Werkstücks mit dem Fräser im Gleichlauf, wobei ein Eingriffswinkel des Fräsers während der Bearbeitung des Werkstücks zwischen 0° und 140° liegt, dabei wird der abgespeicherte Zusammenhang zur Kompensation der Abdrängung des Fräsers verwendet, durch Aufschalten einer der Größe proportionalen Positionskorrektur auf eine Sollposition der Achsen der Werkzeugmaschine.

Es wurde nämlich durch zahlreiche Versuche festgestellt, dass die Abdrängkraft dem Drehmoment, das der Antrieb einer Werkzeugspindel beim Fräsen eines Werkstücks im Gleichlauf aufbringen muss, in weiten Bereichen direkt proportional ist. Das Drehmoment und die Kraft normal zur Werkstückoberfläche nehmen im gleichen Maße mit dem Eingriffswinkel des Fräsers zu, wobei die Annahme eines linearen Zusammenhangs zwischen Drehmoment und Abdrängkraft für einen Eingriffswinkel von etwa 0° bis 140° ausreichend gute Ergebnisse bei der Kompensation der Fräserabdrängung liefert. Die den Fräser abdrängende Kraft ist dabei näherungsweise unabhängig von der Eintauchtiefe des Fräsers.

Die Abdrängkraft und die Abdrängung oder Auslenkung des Fräsers aus seiner Sollbahn sind nach dem hookeschen Gesetz direkt proportional, wobei sich die Proportionalitätskonstante (Federkonstante) aus den Nachgiebigkeiten der jeweiligen Achsen, des Werkzeugs, der Aufspannung und des bearbeiteten Werkstückes ergeben. Sofern die Nachgiebigkeiten der Aufspannung und des Werkstücks hinreichend klein sind, genügt es, die maschinenspezifischen Nachgiebigkeiten der Achsen und des Werkzeugs einmal zu bestimmen und bei der Kompensation der Abdrängung zu berücksichtigen.

Da das Drehmoment des Antriebs der Werkzeugspindel ohne erheblichen Aufwand für spezielle Sensoren nicht unmittelbar zugänglich ist, wurden der Numerischen Steuerung zugängliche Größen gesucht, die dem Drehmoment proportional sind. Solche Größen sind Werte oder Parameter, die von der Steuerung intern ermittelt und verarbeitet werden, oder die von externen Sensoren wie beispielsweise Lagemessgeräten zugeführt werden. Die Größen werden beispielsweise in Regelkreisen der Numerischen Steuerung verwendet.

Eine solche Größe ist beispielsweise der Strom, der in den Antriebsmotor der Werkzeugspindel fließt, wobei in einer feldorientierten Regelung des Motors die momentbildende Komponente des Stromes betrachtet werden muss. Greift man in einer Numerischen Steuerung diesen Strom als dem Drehmoment proportionale Größe ab, so sollte der Strom um den Vorsteuerstrom des Regelkreises reduziert werden, weil dieser üblicherweise die für die Abdrängung unerhebliche Reibung im Spindelantrieb überwindet, bzw. vorrauschauend das Drehmoment verändert, wenn Beschleunigungsvorgänge bevorstehen.

Um die dem Drehmoment proportionale Größe zur Kompensation der Abdrängung verwenden zu können, muss der lineare Zusammenhang zwischen dieser Größe und der Abdrängkraft bzw. der Abdrängung mittels eines Lernschnitts festgestellt werden, und zwar für jeden Fräser auf einer bestimmten Werkzeugmaschine und für jede betroffene Achsrichtung. Der Zusammenhang entspricht jeweils einer Geradensteigung. Für hinreichend stabile Werkstücke und Aufspannungen kann dann eine Abdrängungskompensation für die jeweilige Achsrichtung vorgenommen werden, indem die Größe mit der jeweiligen Fräser- und achsspezifischen Geradensteigung multipliziert wird, und die so erhaltene Abdrängung als Korrektur auf die Sollpositionen der Achsen aufgeschaltet wird.

Die mittels Lernschnitt ermittelten Geradensteigungen können z.B. in der Werkzeugtabelle der Werkzeugmaschine abgelegt werden, in der auch andere werkzeugspezifische Kenngrößen wie Fräserradius und Fräserlänge abgelegt sind.

Beim Lernschnitt sollte auch der Leerlaufstrom der Werkzeugspindel ermittelt und abgespeichert werden. Der während einer Bearbeitung ermittelte Strom sollte um diesen Leerlaufstrom verringert werden, denn er überwindet im Wesentlichen nur die Reibung im Spindelantrieb. Falls die Vorsteuerung des Spindelstroms gut funktioniert, kann der um den Vorsteuerstrom reduzierte Strom im Leerlauf zwar 0 sein, falls die Vorsteuerung die Reibung aber nicht vollständig erfasst oder falls gar keine Vorsteuerung des Stromes erfolgt, so verbessert die Ermittlung und Verwendung des Leerlaufstromes das Ergebnis der Kompensation erheblich.

Neben dem Leerlaufstrom des Lernschnittes sollte außerdem die Drehzahl während des Lernschnittes in der Werkzeugtabelle abgelegt werden. Die Abdrängkraft ist von dieser Drehzahl abhängig, daher sollten der Lernschnitt und die spätere Bearbeitung eines Werkstücks bei annähernd gleicher Drehzahl erfolgen. Die Numerische Steuerung sollte daher die Einhaltung dieser Bedingung sicherstellen oder zumindest eine Warnung ausgeben, wenn die tatsächliche Drehzahl zu sehr von der Drehzahl des Lernschnittes abweicht. Die gleiche Überlegung gilt auch für den Vorschub des Fräsers während des Lernschnittes. Drehzahl und Vorschub sollten daher als Randbedingungen gespeichert werden.

Der hier verwendete Zusammenhang gilt, wie im Folgenden noch verdeutlicht wird, nur für eine Bearbeitung im Gleichlauf. Falls auf der Numerischen Steuerung wie heute oft üblich eine Bearbeitungssimulation läuft, etwa für die Ausgabe einer Simulationsgrafik der Bearbeitung, kann die Steuerung anhand der Lage des Fräsers, des Werkstücks, der Bewegungsrichtung der Achsen und der Drehrichtung der Werkzeugspindel feststellen, ob ein Gleichlauf vorliegt, und eine Kompensation nur in diesem Fall aktivieren. Eine Simulation, die zwischen Gleichlauf und Gegenlauf unterscheiden kann, benötigt keine große Rechenleistung. Alternativ kann beim Erstellen des Bearbeitungsprogramms (Teileprogramms) darauf geachtet werden, dass stets (oder nur bei besonders kritischen Flächen) im Gleichlauf bearbeitet wird.

Der Strom des Spindelantriebs enthält selbst keine Information darüber, in welche Richtung die Fräserabdrängung wirkt. Geht man aber von Gleichlauf aus, und kennt man die Drehrichtung der Spindel und die Bewegungsrichtung der beteiligten Achsen, so lässt sich die Richtung der Abdrängung aus dem Kreuzprodukt der richtungsbehafteten (Drehsinn der Spindel) Fräserachse und der Vorschubrichtung berechnen. Die benötigten Informationen liegen in einer Numerischen Steuerung jederzeit vor.

In Werkzeugmaschinen ohne Schwenkachsen liegt die Vorschubrichtung meist in der X-Y - Ebene, die Fräserachse liegt parallel zur Z-Richtung, senkrecht zur X-Y - Ebene. Die Abdrängkraft liegt dann ebenfalls in der X-Y Ebene und kann mit den X- und Y-Antrieben kompensiert werden. Bei Werkzeugmaschinen mit Schwenkachsen muss die Spindelachse zunächst in das Maschinenkoordinatensystem umgerechnet werden, um dann mit dem Kreuzprodukt die Richtung der Abdrängung berechnen und kompensieren zu können.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: eine Darstellung der Fräserabdrängung ohne Kompensation,
- Figur 2: eine Darstellung der Fräserabdrängung mit Kompensation,
- Figur 3: den Zusammenhang zwischen dem Drehmoment eines Antriebs einer Werkzeugspindel und der Abdrängkraft, die auf den Fräser wirkt,
- Figur 4: eine Darstellung der zur Einrichtung der Kompensation notwendigen Schritte,
- Figur 5: einen Lernschnitt an einer Flanke,
- Figur 6: einen Lernschnitt in einer Kreistasche.

### BESCHREIBUNG DER AUSFÜHRUNGSFORMEN

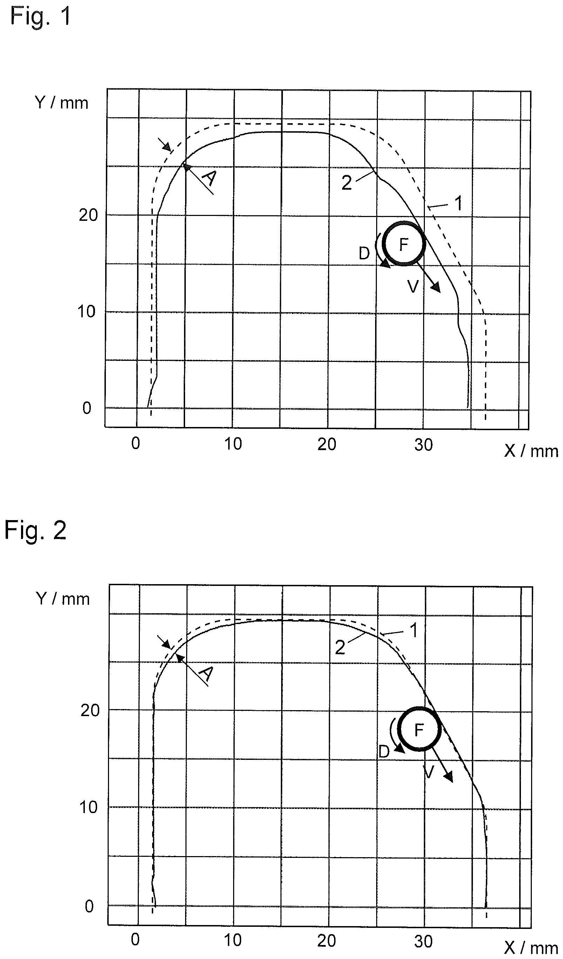

Mit den Figuren 1 und 2 soll zunächst die positive Auswirkung des erfindungsgemäßen Verfahrens zur Kompensation der Abdrängung des Fräsers gezeigt werden.

Die Figur 1 zeigt das Ergebnis einer Bearbeitung eines Werkstückes in der X-Y-Ebene, mit den X- und Y- Achsen einer 3-Achs-Werkzeugmaschine. Dabei wird mit einem im Gleichlauf betriebenen Fräser F eine Tasche ausgeräumt. Die Vorschubrichtung V und der Drehsinn D des Fräsers F sind dargestellt. Die programmierte Sollkontur 1 und die tatsächlich erhaltene Istkontur 2 der Tasche weichen deutlich erkennbar voneinander ab. Die Istkontur 2 kann nach der Bearbeitung beispielsweise mit einem messenden oder schaltenden Taster erfasst werden. Dargestellt ist hier die Abweichung A von der Sollkontur 1 mit einer 25-fachen Überhöhung. Die maximale Fräserabdrängung A beträgt in der Figur 1 bis zu 135 µm. Bei typischen Steifigkeiten einer Werkzeugmaschine von 10 - 30 N/µm treten solche Abweichungen in der Praxis durchaus auf. Vor allem Ecken und andere Bereiche mit sich schnell ändernden Prozesskräften sind hier kritisch. Es können optische Marken auf der Werkstückoberfläche entstehen.

Bei der in der Figur 2 dargestellten Bearbeitung wurde dasselbe Bearbeitungsprogram und derselbe Fräser F verwendet wie im Falle der Figur 1, es wurde aber zusätzlich das Verfahren zur Kompensation der Abdrängung A des Fräsers F aktiviert. Man erkennt sofort, dass die maximale Abdrängung A des Fräsers F erheblich reduziert ist, nämlich auf einen Wert von maximal 33 µm. Die maximale Abdrängung A wurde also ungefähr um einen Faktor 5 verkleinert, die Sollkontur 1 und die Istkontur 2 fallen außerdem in weiten Bereichen zusammen.

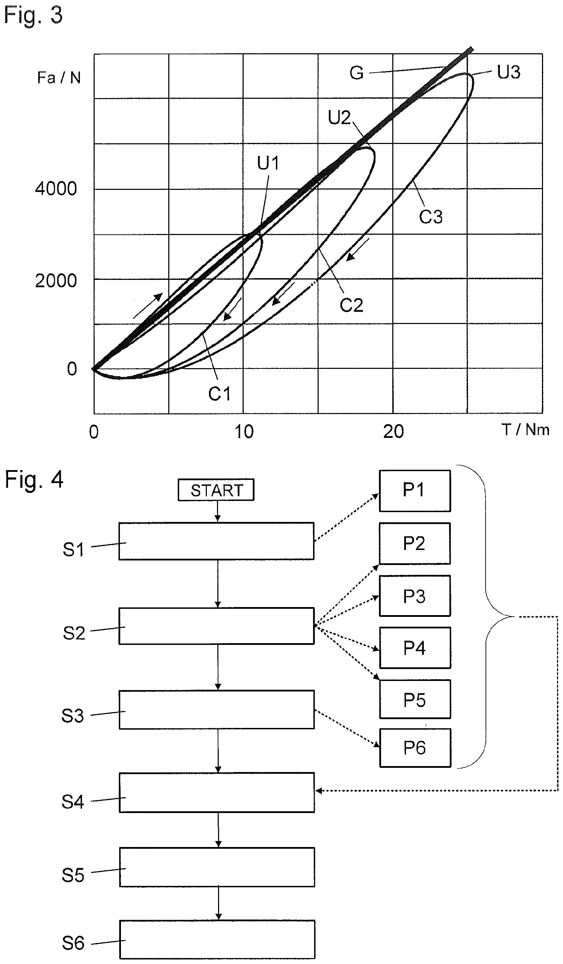

Die Figur 3 stellt den Zusammenhang zwischen dem beim Fräsen aufzubringenden Drehmoment T des Spindelantriebs einer Werkzeugmaschine und der den Fräser abdrängenden Kraft Fa (Abdrängkraft Fa) dar, und zwar für verschiedene Schnittbedingungen:
Es wurden drei unterschiedliche Schnitte C1, C2, C3 mit zunehmendem Zahnvorschub (C1: 0,08mm, C2: 0,17mm, C3: 0,25mm) durchgeführt. Jeder Schnitt C1, C2, C3 beginnt und endet im Ursprung des Diagramms. Vom Beginn des Schnitts C1, C2, C3 bis zum jeweiligen Umkehrpunkt U1, U2, U3 nimmt der Eingriffswinkel des Fräsers von 0° bis 180° zu. Bis zum Umkehrpunkt U1, U2, U3 erfolgt jeder Schnitt im Gleichlauf, danach bis zur Rückkehr zum Ausgangspunkt im Gegenlauf.

Man erkennt einen Bereich, in dem alle drei Schnitte C1, C2, C3 annähernd auf einer gemeinsamen Geraden G liegen: Diese Näherung gilt aber nur im Gleichlauf, und zwar jeweils für einen Eingriffswinkel von 0° bis etwa 140°. Im Gegenlauf gibt es so einen Bereich mit gemeinsamer Steigungsgerade nicht.

In diesem Bereich verhält sich die abdrängende Kraft Fa also annähernd proportional zum Drehmoment T des Antriebs der Werkzeugspindel. Da die Abdrängung A des Fräsers F wegen dem hookeschen Gesetz wiederum proportional ist zur abdrängenden Kraft Fa, ist die Abdrängung A unter den genannten Bedingungen (Eingriffswinkel 0° bis 140° im Gleichlauf) ebenfalls proportional zum Drehmoment T des Antriebs der Werkzeugspindel. Diesen näherungsweisen, von anderen Prozessbedingungen unabhängigen linearen Zusammenhang macht sich die vorliegende Erfindung zu Nutze.

Da dieses Drehmoment T aber nicht auf einfache Weise unmittelbar zugänglich ist, wurde für dieses Ausführungsbeispiel der Antriebsstrom, oder gewisse, einfach zu bestimmende Komponenten dieses Antriebsstromes als zum Drehmoment T proportionale Größen herangezogen, um als Ausgangspunkt für die Kompensation der Abdrängung A zu dienen. Diese Komponenten des Antriebsstromes stehen als steuerungsinterne Größen innerhalb einer Numerischen Steuerung zur Verfügung. Ein Verfahren zur Kompensation der Fräserabdrängung A, das als Software auf einer Numerischen Steuerung abläuft, kann auf diese Größen einfach zugreifen. Es wird dann lediglich der Proportionalitätsfaktor benötigt, der - multipliziert mit der steuerungsinternen Größe - die Berechnung der zu kompensierenden Abdrängung A erlaubt.

Anhand der Figuren 4, 5 und 6 soll erklärt werden, wie die für die Kompensation notwendigen Größen, und hier insbesondere der Proportionalitätsfaktor zwischen dem relevanten Antriebsstrom und der zu korrigierenden Abdrängung A aufgefunden werden können. Dabei wird vom einfachen Fall einer numerisch gesteuerten Werkzeugmaschine mit drei Linearachsen ausgegangen, deren Fräser F in Z-Richtung ausgerichtet ist und mit einstellbarer Zustellung (entlang der Z-Richtung) in der X- und Y-Richtung bewegt werden kann. Die Kompensation der Abdrängung A muss dabei durch Aufschalten von Positionskorrekturen für jede der beiden Achsrichtungen X, Y durchgeführt werden. Die Nachgiebigkeit der Werkzeugmaschine kann in den jeweiligen Achsrichtungen X, Y unterschiedlich sein, so dass für jede Achse X, Y ein eigener Proportionalitätsfaktor ermittelt werden muss. Komplexere Maschinenarchitekturen mit zusätzlichen Achsen erfordern das Ermitteln von weiteren Proportionalitätsfaktoren, sowie das Umrechnen von verkippten Spindelachsen in das Maschinenkoordinatensystem.

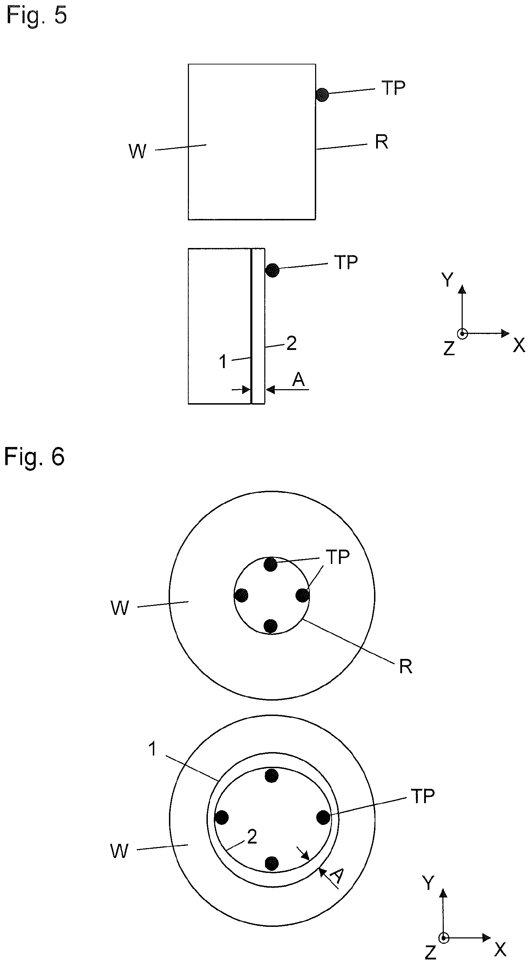

Die zur Vorbereitung der Kompensation notwendigen Schritte werden im Folgenden anhand der Figur 4 beschrieben. Die Schritte können zum Teil anhand der Figuren 5 und 6 nachvollzogen werden.

Nach dem Start des Verfahrens wird in einem ersten Schritt S1 eine Referenzfläche R eines Testwerkstücks W mit einem Taster TP ausgemessen. In der Figur 5 liegt diese Referenzfläche R parallel zur Y-Z - Ebene, es wird die Lage der Referenzfläche R in der X-Richtung durch Antasten ermittelt. Diese Lage der Referenzfläche R vor dem eigentlichen Lernschnitt wird als erster Parameter P1 festgehalten.

Dann wird in einem zweiten Schritt S2 ein Lernschnitt durchgeführt, mit dem eine Sollkontur 1 hergestellt werden soll. Im Zusammenhang mit diesem Lernschnitt wird festgehalten, mit welchem Vorschub und mit welcher Spindeldrehzahl der Lernschnitt durchgeführt wird. Diese Randbedingung des Lernschnitts wird als zweiter Parameter P2 festgehalten. Außerdem wird unmittelbar vor oder nach dem Lernschnitt der Leerlaufstrom der Spindel gespeichert und als dritter Parameter P3 gespeichert. Während des Lernschnitts wird der Laststrom als vierter Parameter P4 gespeichert. Dieser Laststrom P4 kann dabei wie oben beschrieben ermittelt werden: Es kann der um den Leerlaufstrom P3 verminderte Spindelstrom, oder in einer feldorientierten Regelung der momentbildende Spindelstrom, vermindert um den Leerlaufstrom P3 und/oder um den Vorsteuerstrom verwendet werden. Der Laststrom P4 sollte möglichst gut dem für die Fräsbearbeitung aufgebrachten Drehmoment T entsprechen. Zur Verbesserung der Kompensation der Abdrängung A empfiehlt es sich, bei der Bestimmung des Laststromes P4 gewisse Frequenzbereiche zu filtern, um das Stromsignal zu glätten. Dabei kann beispielsweise die Drehfrequenz des Fräsers F, die Zahneingriffsfrequenz oder das Stromrauschen aus dem Laststrom P4 entfernt werden.

Als fünfter Parameter P5 wird die Zustellung in X-Richtung gespeichert, die sich aus der Lage der Referenzfläche R und der Sollkontur 1 ergibt: Ohne Abdrängung A sollte die Istkontur 2 nach dem Lernschnitt der Sollkontur 1 entsprechen.

Nach dem Lernschnitt im zweiten Schritt S2 wird im dritten Schritt S3 die Istkontur 2 mit dem Taster TP ausgemessen. Die Differenz aus der Sollkontur 1 und der Istkontur 2 ergibt die Abdrängung A des Fräsers F, die als sechster Parameter P6 abgespeichert wird.

Im vierten Schritt S4 werden die bisherigen Ergebnisse ausgewertet: Für den Laststrom P4, der im zweiten Schritt S2 ermittelt wurden, wird die korrespondierende Abdrängung A des Fräsers F festgestellt. Da die Gerade G in Figur 3 durch den Ursprung verläuft, kann so eine Steigung ermittelt werden, die eine näherungsweise Berechnung der Abdrängung A zu jedem Laststrom P4 erlaubt. Wie anhand der Figur 3 gezeigt wurde, gilt diese Steigung für eine Bearbeitung im Gleichlauf bei einem Eingriffswinkel im Bereich von 0° bis etwa 140°.

In einem fünften Schritt S5 werden die ermittelten Ergebnisse so abgespeichert, dass sie bei einer späteren Bearbeitung eines Werkstückes verfügbar sind. Da die ermittelte Steigung werkzeugspezifisch ist, bietet sich hierfür die Werkzeugtabelle an, in der verschiedenste Parameter eines jeden an der Werkzeugmaschine verfügbaren Werkzeugs gespeichert sind. Diese Parameter sind beispielsweise der Werkzeugtyp und die geometrischen Abmessungen des Werkzeugs wie die Länge und der Radius eines Schaftfräsers F. In dieser Werkzeugtabelle wird also zusätzlich die im vierten Schritt S4 ermittelte Steigung der Geraden G abgelegt, und zwar richtungsabhängig für jede Maschinenachse X, Y. Außerdem empfiehlt es sich, auch die Randbedingungen P2 des Lernschnitts zu speichern, um bei der realen Bearbeitung auf zumindest ähnliche Bedingungen achten zu können. Es können auch für einen Fräser F mehrere Lernschnitte mit unterschiedlichen Randbedingungen P2 (z.B. beim Schlichten und Schruppen) durchgeführt und in der Werkzeugtabelle abgelegt und verwaltet werden, um für diese unterschiedlichen Randbedingungen P2 passende Abdrängungen A berechnen zu können. Für als gleich anzusehende Fräser F kann auch ein gemeinsamer Datensatz aus Geradensteigung und Randbedingungen ausreichen.

In der Figur 6 ist eine Alternative zum Lernschnitt der Figur 5 gezeigt. Während mit dem Lernschnitt der Figur 5 die Steigung der Geraden G nur für jeweils eine Achsrichtung X ermittelt werden kann (weshalb der Lernschnitt für jede Achsrichtung X, Y wiederholt werden muss), ermöglicht der Lernschnitt der Figur 6 die Ermittlung der Geradensteigung für zwei Achsrichtungen X und Y. Hierzu wird im ersten Schritt S1 eine kreisförmige Tasche als Referenzfläche R gefertigt. Das Ausmessen einer Referenzfläche R kann hier auch entfallen, wenn die Tasche in eine zunächst geschlossene Fläche hinein gefräst wird. Die Sollkontur 1 der Tasche ist kreisförmig. An der Abweichung der Istkontur 2 von der Sollkontur 1 erkennt man, dass in diesem Beispiel die Abdrängung A für die Y-Richtung größer ist als die Abdrängung A in der X-Richtung. Es werden sich also unterschiedliche Steigungen für die Geraden G der jeweiligen Achsen X, Y ergeben.

Nachdem nun mit den Schritten S1 - S5 alle für eine Kompensation der Abdrängung A notwendigen Voraussetzungen geschaffen wurden, kann die Kompensation in einem sechsten Schritt S6 bei der realen Bearbeitung eines Werkstücks eingesetzt werden. Gleichlauf und die Einhaltung der Randbedingungen P2 des Lernschnitts in einem vorgegebenen Toleranzbereich vorausgesetzt, kann dann während der Bearbeitung der Laststrom P4 mit der für jede Achsrichtung ermittelten Steigung (also der Proportionalitätskonstante) multipliziert werden, und der so erhaltene Wert der Abdrängung A als Korrekturoffset zur Sollposition des Fräsers F addiert werden. Dabei muss die Richtung der Abdrängung A berücksichtigt werden, die mit dem Kreuzprodukt aus der Richtung des Vorschubs V und der Drehrichtung D des Fräsers F ermittelt werden kann. Die Abdrängung A steht daher senkrecht auf der mit dem Fräser F gefertigten Flanke des Werkstücks.

Dabei kann die Kompensation zunächst grundsätzlich aktiviert und über eine automatisierte Erkennung des Gleichlaufs immer dann tatsächlich verwendet werden, wenn etwa eine parallel laufende Simulation der Zerspanung einen Gleichlauf erkennt. So eine Simulation muss nicht besonders genau sein, und läuft auf modernen Numerischen Steuerungen zur Visualisierung des Prozesses oft schon parallel zur Bearbeitung. Alternativ kann in einem Bearbeitungsprogramm an kritischen Stellen auf eine Bearbeitung im Gleichlauf geachtet werden, und dann die Verwendung der Kompensation im Bearbeitungsprogramm vorgegeben werden.

Ist die Kompensation eingeschaltet, sollte die Numerische Steuerung darauf achten, dass die Randbedingungen P2 des Lernschnitts in etwa eingehalten werden, denn nur dann wird die zur Kompensation verwendete Steigung gute Ergebnisse bringen. Bei einer zu großen Abweichung kann die Numerische Steuerung eine entsprechende Warnung ausgeben.

Bisher wurde davon ausgegangen, dass die Nachgiebigkeiten der Aufspannung und des Werkstücks hinreichend klein sind gegenüber den Elastizitäten der Maschinenachsen X, Y und des Fräsers F. Der einmal ermittelte Zusammenhang zwischen dem Laststrom P4 und der Abdrängung A kann dann für unterschiedlichste Werkstücke verwendet werden.

Für spezielle Aufspannungen oder spezielle Werkstücke können aber auch deren Nachgiebigkeiten eine größere Rolle spielen. Dann kann das oben beschriebene Verfahren zur Ermittlung des Zusammenhangs zwischen dem Laststrom P4 und der Abdrängung A an dieser Aufspannung und an diesem Werkstück wiederholt werden, und der Zusammenhang für die spezielle Anwendung ermittelt, gespeichert und in der Folge angewendet werden.

Es hat sich gezeigt, dass mit der hier beschriebenen Kompensation der Abdrängung A sogar die durch die Abnutzung des Fräsers F mit der Zeit ansteigenden Abdrängkräfte Fa kompensiert werden, da durch den Verschleiß ein höherer Laststrom P4 fließt und damit ein entsprechend größerer Offset zur Kompensation der Abdrängung A ermittelt wird.

## Patentansprüche

1. Verfahren zur Kompensation der Abdrängung (A) eines Fräsers (F) beim Bearbeiten eines Werkstücks mit einer numerisch gesteuerten Werkzeugmaschine mit mehreren Achsen (X, Y), mit folgenden Schritten:
• in einem ersten und zweiten Schritt (S1, S2): Ausführen eines Lernschnittes an einem Testwerkstück (W) mit bekannter Geometrie mit dem an einer Werkzeugspindel befestigten Fräser (F) im Gleichlauf, dabei
• in einem dritten und vierten Schritt (S3, S4): Ermitteln eines Zusammenhangs zwischen einer dem Drehmoment (T) eines Antriebs der Werkzeugspindel proportionalen Größe (P4) und der Abdrängung (A) des Fräsers (F) normal zu einer Oberfläche des Testwerkstücks (W), wobei die Abdrängung (A) durch einen Vergleich einer Istkontur (2) des Testwerkstücks (W) mit einer Sollkontur (1) festgestellt wird,
• in einem fünften Schritt (S5): Abspeichern des Zusammenhangs für den Fräser (F),
• in einem sechsten Schritt (S6): Bearbeiten des Werkstücks mit dem Fräser (F) im Gleichlauf, wobei ein Eingriffswinkel des Fräsers (F) während der Bearbeitung des Werkstücks (W) zwischen 0° und 140° liegt, dabei Verwenden des abgespeicherten Zusammenhangs zur Kompensation der Abdrängung (A) des Fräsers (F) durch Aufschalten einer der Größe (P4) proportionalen Positionskorrektur auf eine Sollposition der Achsen (X, Y) der Werkzeugmaschine.

2. Verfahren nach Anspruch 1, bei dem der erste und/oder der dritte Schritt (S1, S3) eine Vermessung des Testwerkstücks (W) mit einem Taster (TP) umfasst.

3. Verfahren nach Anspruch 1 oder 2, bei dem im zweiten Schritt (S2) eine für den Lernschnitt verwendete Drehzahl und/oder ein Vorschub (V) des Fräsers (F) als Randbedingung (P2) abgespeichert wird, und im sechsten Schritt (S6) die Einhaltung dieser Randbedingung (P2) überwacht wird.

4. Verfahren nach Anspruch 1, 2 oder 3, bei dem mittels Simulation oder durch Programmierung eine Bearbeitung im Gleichlauf festgestellt bzw. erzwungen wird.

5. Verfahren nach einem der vorhergehenden Ansprüche, bei dem ein während des Lernschnitts ermittelter Laststrom des Antriebs als die dem Drehmoment (T) des Antriebs der Werkzeugspindel proportionale Größe (P4) verwendet wird.

6. Verfahren nach Anspruch 5, bei dem als Laststrom (P4) ein während des Lernschnitts im Antrieb der Werkzeugspindel fließender Strom, vermindert um einen Leerlaufstrom und/oder um einen Vorsteuerstrom des Antriebs gespeichert wird.

7. Verfahren nach Anspruch 5, bei dem im Falle einer feldorientierten Regelung des Antriebs als Laststrom (P4) ein momentbildender Strom des Antriebs, vermindert um einen Leerlaufstrom und/oder um einen Vorsteuerstrom des Antriebs gespeichert wird.

8. Verfahren nach einem der vorhergehenden Ansprüche, bei dem die Größe (P4) von störenden Frequenzanteilen durch Filterung befreit wird.

9. Verfahren nach Anspruch 8, bei dem die Frequenzanteile der Drehfrequenz des Fräsers (F), der Zahneingriffsfrequenz oder dem Stromrauschen entsprechen.

10. Verfahren nach einem der vorhergehenden Ansprüche, bei dem im fünften Schritt (P5) der Zusammenhang als Geradensteigung in einer Werkzeugtabelle der Werkzeugmaschine abgespeichert wird.

11. Numerische Steuerung für eine Werkzeugmaschine, eingerichtet zur Durchführung eines Verfahrens nach einem der vorhergehenden Ansprüche.

## Claims

1. Method for compensating the deflection (A) of a milling cutter (F) when machining a workpiece with a numerically controlled machine tool with a plurality of axes (X, Y), with the following steps:
• in a first and second step (S1, S2) : executing a learning step in synchronous operation on a test workpiece (W) with a known geometry with the milling cutter (F) which is attached to a tool spindle, and in this context
• in a third and fourth step (S3, S4): determining a relationship between a variable (P4), which is proportional to the torque (T) of a drive of the tool spindle, and the deflection (A) of the milling cutter (F) in the normal direction with respect to a surface of the test workpiece (W), wherein the deflection (A) is ascertained by comparing an actual contour (2) of the test workpiece (W) with a setpoint contour (1),
• in a fifth step (S5): storing the relationship for the milling cutter (F),
• in a sixth step (S6): machining the workpiece with the milling cutter (F) in a synchronous operation, wherein an intervention angle of the milling cutter (F) during the machining of the workpiece (W) is between 0° and 140°, and in this context using the stored relationship for compensating the deflection (A) of the milling cutter (F) by applying a position correction, proportional to the variable (P4), to a setpoint position of the axes (X, Y) of the machine tool.

2. Method according to Claim 1, in which the first and/or the third step (SI, S3) comprise/comprises measurement of the test workpiece (W) with a sensing device (TP).

3. Method according to Claim 1 or 2, in which in the second step (S2) a rotational speed which is used for the learning step and/or a forward feed (V) of the milling cutter (F) are/is stored as a boundary condition (P2), and in the sixth step (S6) the compliance with this boundary condition (P2) is monitored.

4. Method according to Claim 1, 2 or 3, in which machining in a synchronous operation is detected or forcibly brought about by means of simulation or by programming.

5. Method according to one of the preceding claims, in which a load current, determined during the learning step, of the drive is used as the variable (P4) which is proportional to the torque (T) of the drive of the tool spindle.

6. Method according to Claim 5, in which a current which flows in the drive of the tool spindle during the learning step as a load current (P4) is stored after having been reduced by an open circuit current value and/or a pilot control current value of the drive.

7. Method according to Claim 5, in which when there is field-oriented control of the drive as a load current (P4) a torque-forming current of the drive is stored after having been reduced by an open circuit current value and/or by a pilot control current value of the drive.

8. Method according to one of the preceding claims, in which the variable (P4) is freed of interference frequency components by filtering.

9. Method according to Claim 8, in which the frequency components correspond to the rotational frequency of the milling cutter (F), to the tooth engagement frequency or to the current noise.

10. Method according to one of the preceding claims, in which in the fifth step (P5) the relationship is stored as a straight-line gradient in a tool table of the machine tool.

11. Numerical control for a machine tool, configured to carry out a method according to one of the preceding claims.

## Revendications

1. Procédé de compensation de la déflection (A) d'une fraise (F) lors de l'usinage d'une pièce à travailler à l'aide d'une machine-outil à commande numérique, dotée de plusieurs axes (X, Y), comprenant les étapes suivantes consistant à :
• dans une première et une deuxième étape (S1, S2) : effectuer une étape d'apprentissage sur une pièce à travailler d'essai (W) de géométrie connue, en synchronisme avec la fraise (F) fixée sur une broche d'outil, en même temps
• dans une troisième et une quatrième étape (S3, S4) : établir une relation entre une grandeur (P4) proportionnelle au couple (T) d'un dispositif d'entraînement de la broche d'outil et la déflection (A) de la fraise (F) perpendiculairement à une surface de la pièce à travailler d'essai (W), la déflection (A) étant déterminée par une comparaison d'un contour réel (2) de la pièce à travailler d'essai (W) avec un contour théorique (1),
• dans une cinquième étape (S5) : enregistrer la relation pour la fraise (F),
• dans une sixième étape (S6) : usiner la pièce à travailler avec la fraise (F) en synchronisme, un angle d'attaque de la fraise (F) pendant l'usinage de la pièce à travailler (W) étant compris entre 0° et 140°, en même temps utiliser la relation enregistrée pour compenser la déflection (A) de la fraise (F) par l'application d'une correction de position proportionnelle à la grandeur (P4) à une position théorique des axes (X, Y) de la machine-outil.

2. Procédé selon la revendication 1, dans lequel la première et/ou la troisième étape (S1, S3) comprennent un mesurage de la pièce à travailler d'essai (W) à l'aide d'un palpeur (TP).

3. Procédé selon la revendication 1 ou 2, dans lequel, à la deuxième étape (S2), une vitesse de rotation et/ou une avance (V) de la fraise (F), utilisée(s) pour l'étape d'apprentissage, est/sont enregistrée(s) comme une contrainte (P2), et dans la sixième étape (S6), le respect de cette contrainte (P2) est surveillé.

4. Procédé selon la revendication 1, 2 ou 3, dans lequel une simulation ou une programmation permet de fixer ou de forcer un usinage en synchronisme.

5. Procédé selon l'une quelconque des revendications précédentes, dans lequel un courant de charge, établi pendant l'étape d'apprentissage du dispositif d'entraînement, est utilisé comme la grandeur (P4) proportionnelle au couple (T) du dispositif d'entraînement de la broche d'outil.

6. Procédé selon la revendication 5, dans lequel, comme courant de charge (P4), un courant circulant pendant l'étape d'apprentissage dans le dispositif d'entraînement de la broche d'outil, diminué d'un courant à vide et/ou d'un courant de commande pilote du dispositif d'entraînement, est enregistré.

7. Procédé selon la revendication 5, dans lequel, en cas de régulation à orientation de champ du dispositif d'entraînement, un courant de création de couple du dispositif d'entraînement, diminué d'un courant à vide et/ou d'un courant de commande pilote du dispositif d'entraînement, est enregistré comme courant de charge (P4) .

8. Procédé selon l'une quelconque des revendications précédentes, dans lequel la grandeur (P4) est libérée par filtrage des parts de fréquence perturbatrices.

9. Procédé selon la revendication 8, dans lequel les parts de fréquence de la fréquence de rotation de la fraise (F) correspondent à la fréquence d'engrènement des dents ou au bruit du courant.

10. Procédé selon l'une quelconque des revendications précédentes, dans lequel à la cinquième étape (S5), la relation est enregistrée sous la forme d'une pente de droite dans un tableau d'outil de la machine-outil.

11. Commande numérique pour une machine-outil ; aménagée pour effectuer un procédé selon l'une quelconque des revendications précédentes.
